Europäisches Patentamt

European Patent Office

Office européen des brevets

(19)

(11) Veröffentlichungsnummer: **0 253 217**

**A2**

(12) **EUROPÄISCHE PATENTANMELDUNG**

(21) Anmeldenummer: 87109518.8

(22) Anmeldetag: 02.07.87

(51) Int. Cl.⁴: **H04N 5/782**

(30) Priorität: 11.07.86 DE 3623341

(43) Veröffentlichungstag der Anmeldung:
20.01.88 Patentblatt 88/03

(84) Benannte Vertragsstaaten:
AT BE CH DE ES FR GB GR IT LI LU NL SE

(71) Anmelder: Deutsche Thomson-Brandt GmbH
Postfach 2060
D-7730 Villingen-Schwenningen(DE)

(72) Erfinder: Platte, Hans-Joachim, Dr-Ing.
Königsberger Weg 22
D-3005 Hemmingen 4(DE)
Erfinder: Scholz, Werner, Dipl.-Ing.
Osterstrasse 20
D-3007 Gehrden(DE)

(74) Vertreter: Körner, Peter, Dipl.-Ing.
Deutsche Thomson-Brandt GmbH Patent-
und Lizenzabteilung Göttinger Chaussee 76
D-3000 Hannover 91(DE)

(54) **Verfahren zur Aufzeichnung eines Videosignals auf einem bandförmigen Aufzeichnungsträger.**

(57) Bei der Hauptanmeldung wird ein Videosignal in Blöcken (B) mit parallel zur Bandkante verlaufenden Spuren aufgezeichnet. Erfindungsgemäß wird die Reihenfolge der in einem Block (B) geschriebenen Bilder so gewählt, daß bei veränderten Abtastgeschwindigkeiten die Wiedergabe zeitlich äquidistanter Bilder möglich ist.

EP 0 253 217 A2

Fig.1

## Verfahren zur Aufzeichnung eines Videosignals auf einem bandförmigen Aufzeichnungsträger

Die Hauptanmeldung betrifft ein Verfahren zur Aufzeichnung eines Signals auf einem bandförmigen Aufzeichnungsträger, insbesondere für ein Digitalsignal auf einem Magnetband, bei dem jeweils zeitlich aufeinanderfolgende, gegenüber der Länge des Trägers kurze Abschnitte auf dem Träger nebeneinander liegen.

Der Erfindung nach der Hauptanmeldung liegt die Aufgabe zugrunde, ein neuartiges Aufzeichnungsverfahren zu schaffen, das sich besonders für die digitale Aufzeichnung eines Videosignals und für die Realisierung üblicher Trickmodi eignet.

Diese Aufgabe wird durch die Erfindung nach der Hauptanmeldung dadurch gelöst, daß die Spurabschnitte etwa parallel zur Trägerkante laufen und in Querrichtung zur Trägerkante derart nebeneinander liegen, daß die Begrenzungslinien der gebildeten Blöcke von Spurabschnitten senkrecht oder annähernd senkrecht zur Trägerkante gerichtet sind.

Bei einem derartigen Aufzeichnungsverfahren wurde auch vorgeschlagen (P 35 40 901), Sondermodi, wie z.B. Zeitraffung oder Zeitdehnung bei der Wiedergabe, Standbildwiedergabe oder Zeitraffung bei der Aufnahme, durchzuführen. Die Zeitraffung bei der Wiedergabe kann dadurch erfolgen, daß jeweils in einem Block nur jedes n-te Bild gelesen und die dazwischen liegenden Bilder weggelassen werden.

Bei einer derartigen Zeitraffung wird das Magnetband in seiner Längsrichtung mit einer gegenüber der Normalgeschwindigkeit Vo erhöhten Geschwindigkeit $V = n * Vo$ transportiert, z.B. mit n = 1, 2, 3, 4, 6, 8, 12, 24, wobei V positives Vorzeichen (Vorlauf) oder negatives Vorzeichen (Rücklauf) haben kann. Die Rotationsgeschwindigkeit des Kopfrades, die die Abtastgeschwindigkeit bestimmt, beibt dabei im wesentichen unverändert. Die Hubgeschwindigkeit des Kopfrades in Richtung der Rotationsachse bleibt ebenfalls unverändert, da die Köpfe bei dieser Betriebsart den um einen geringen Winkel zur Bandkante geneigten Spuren folgen müssen. Daher bleibt auch die Dauer eines jeweils abgetasteten Bildes unverändert. Dadurch ergibt sich, daß bei Zeitrafferbetrieb die Amplitude des Hubes des Kopfrades verkleinert wird. Wenn bei Vo das Kopfrad eine Hubbewegung Ho von der einen zur anderen Bandkante, also über die ganze Breite des Bandes, ausführt, ist diese Hubbewegung H entsprechend der Erhöhung der Längsgeschwindigkeit verringert. Bei einer Längsgeschwindigkeit von $V = 2^x Vo$ beträgt somit der Hub $H = Ho/2$. Das Kopfrad tastet dann in jedem Block nur einen Teilbereich ab, der nur einen Teil der gesamten Bilder eines Blockes enthält, im Grenzfall pro Block nur ein einziges Bild.

Bei dieser Art der Abtastung ergibt sich bei dem Verfahren gemäß der Hauptanmeldung noch folgender Nachteil. Das Kopfrad führt bei der Aufzeichnung eine Hubbewegung abwechselnd von der ersten zur zweiten und von der zweiten zur ersten Bandkante durch. Die aufeinanderfolgenden Blöcke werden also in entgegengesetzter Richtung quer zur Bandlängsrichtung geschrieben. Dadurch ergibt sich bei Zeitrafferbetrieb, also Abtastung nur eines Teilbereiches eines Blockes, eine Ungleichmäßigkeit in der zeitlichen Aufeinderfolge der abgetasteten Bilder. Wenn z.B. jeweils in einem Block 24 Bilder aufgezeichnet sind und in jedem Block nur das Bild an der ersten Bandkante abgetastet wird, so ergibt sich eine Aufeinanderfolge von Bildern mit den zeitlichen Ordnungzahlen, 1, 48, 49, 96 ... . Der zeitliche Sprung in der Bildfolge ist also sehr unterschiedlich. Das führt zu einer ungleichmäßigen Bewegung bei der Wiedergabe.

Der Erfindung liegt die Aufgabe zugrunde, das Verfahren nach der Hauptanmeldung so abzuwandeln, daß eine Wiedergabe mit abweichender Längsgeschwindigkeit sowohl im Vor-als auch im Rücklauf des Magnetbandes, insbesondere Zeitrafferbetrieb, mit gleichmäßiger Bildfolge erreicht wird. Diese Aufgabe wird durch die im Anspruch 1 beschriebene Erfindung gelöst. Vorteilhafte Weiterbildungen der Erfindung sind in den Unteransprüchen beschrieben.

Die erfindungsgemäße Lösung beruht auf folgender Erkenntnis. Die zeitliche Aufeinanderfolge der Bilder jeweils in einem Block, z.B. Nummer 1 bis 24, kann so von der ursprünglichen Folge abgewandelt werden, daß bei Wiedergabebetrieb mit Zeitraffung in gleichen Abständen von der Bandkante in aufeinanderfolgenden Blöcken Bilder mit dem gewünschten gleichmäßigen Abstand in der zeitlichen Ordnungszahl erscheinen. Auf diese Weise wird erreicht, daß bei Abtastung von einem Bild je Block in jeder beliebigen Kopfradstellung in aufeinanderfolgenden Blöcken äquidistante Bilder abtastbar sind. Die Änderung der Reihenfolge, d.h. die zeitliche Vertauschung aufeinanderfolgender Bilder, kann bei der Aufnahme mit Speichern erfolgen. Die Bilder eines Blockes werden dazu in einen Speicher eingelesen und danach mit der erfindungsgemäß geänderten Reihenfolge ausgelesen und dem Aufzeichnungsgerät zugeführt. Bei der Wiedergabe werden die Bilder in der geänderten Reihenfolge ebenfalls in einen Speicher eingelesen und mit der für die Bildwiedergabe notwendigen, ursprünglichen Reihenfolge aus dem Speicher ausgelesen.

Bei Zeitrafferbetrieb besteht auch die Notwendigkeit, aus einem Block eine Gruppe von mehreren Bildern auszulesen, z.B. bei V = 2Vo die Hälfte aller Bilder. Dann würde das Kopfrad bei unveränderter Hubgeschwindigkeit nur einen Hub über die halbe Breite des Bandes ausführen. Dadurch würden bei dem Verfahren gemäß der Hauptanmeldung bei 24 Bildern pro Block z.B. die Bilder 1 bis 12 abgetastet und die Bilder 13 bis 24 nicht. Das würde wieder zu einer Unregelmäßigkeit in der Aufeinanderfolge der abgetasteten Bilder führen. Deshalb werden gemäß einer Weiterbildung der Erfindung die Bilder eines Blockes in einer solchen geänderten Reihenfolge aufgezeichnet, daß für möglichst viele Abtastgeschwindigkeiten Hubbereiche verfügbar sind, die die Wiedergabe einer der Bandgeschwindigkeit entsprechenden Anzahl von zeitlich äquidistanten Bildern ermöglichen. Es hat sich gezeigt, daß für die aufgezeichneten Bilder eine Reihenfolge gefunden werden kann, bei der für eine Vielzahl von Zeitrafferfaktoren, also eine Vielzahl unterschiedlicher, jeweils in einem Block abgetasteter Bildgruppen, die genannte Bedingung erfüllt werden kann.

Die geänderte Reihenfolge der aufgezeichneten Bilder kann darüberhinaus so erfolgen, daß die Zahl der bei der Aufnahme und bei der Wiedergabe benötigten Bildspeicher verringert wird. Es hat sich gezeigt, daß durch eine geschickte Aufteilung der Bilder auf den Block, d.h. eine besondere zeitliche Reihenfolge der aufgezeichneten Bilder, die beiden zuletzt beschriebenen Forderungen erfüllt werden können. Die Einsparung der Speicher hat besonders den Vorteil, daß vorhandene Speicher für andere Zwecke verwendet werden können.

Die erfindungsgemäße Lösung hat zusätzlich den Vorteil, daß sich Störungen auf dem Band bei der Wiedergabe weniger stark auswirken. Wenn z.B. eine örtlich begrenzte Störung auf dem Band vorliegt, so kann sich diese ohne die erfindungsgemäße Lösung auf eine Vielzahl von zeitlich aufeinanderfolgenden Bildern auswirken, weil zeitlich aufeinanderfolgende Bilder räumlich nebeneinander liegen. Bei der erfindungsgemäßen Lösung liegen Bilder auf dem Magnetband räumlich zusammen, die sehr unterschiedliche zeitliche Ordnungszahlen haben. Das bedeutet, daß z.B. eine Störung auf dem Magnetband das Bild Nr. 7 stört, das Bild 8 aber nicht, weil dieses an einer ganz anderen Stelle des Magnetbandes aufgezeichnet ist und somit nach dem gestörten Bild 7 ungestört erscheint. Dadurch werden Störungen weitgehend auf ein einzelnes Bild beschränkt und dadurch weniger sichtbar. Es besteht dann z.B. auch die Möglichkeit, das gestörte Bild 7 durch ein aus den ungestörten Bildern 6 und 8 gemitteltes Bild zu ersetzen.

Die Erfindung wird im folgenden an Hand der Zeichnung erläutert.
Darin zeigen
Fig. 1A die Aufzeichnung gemäß der Hauptanmeldung,
Fig. 1B die erfindungsgemäß abgewandelte Aufzeichnung, jeweils an einem vereinfachten Beispiel von nur vier Bildern pro Block,
Fig. 2 ein vereinfachtes Blockschaltbild zur Realisierung der Aufzeichnung gemäß Fig. 1B und
Fig. 3 ein Blockschaltbild für die Steuerung der Bildspeicher.

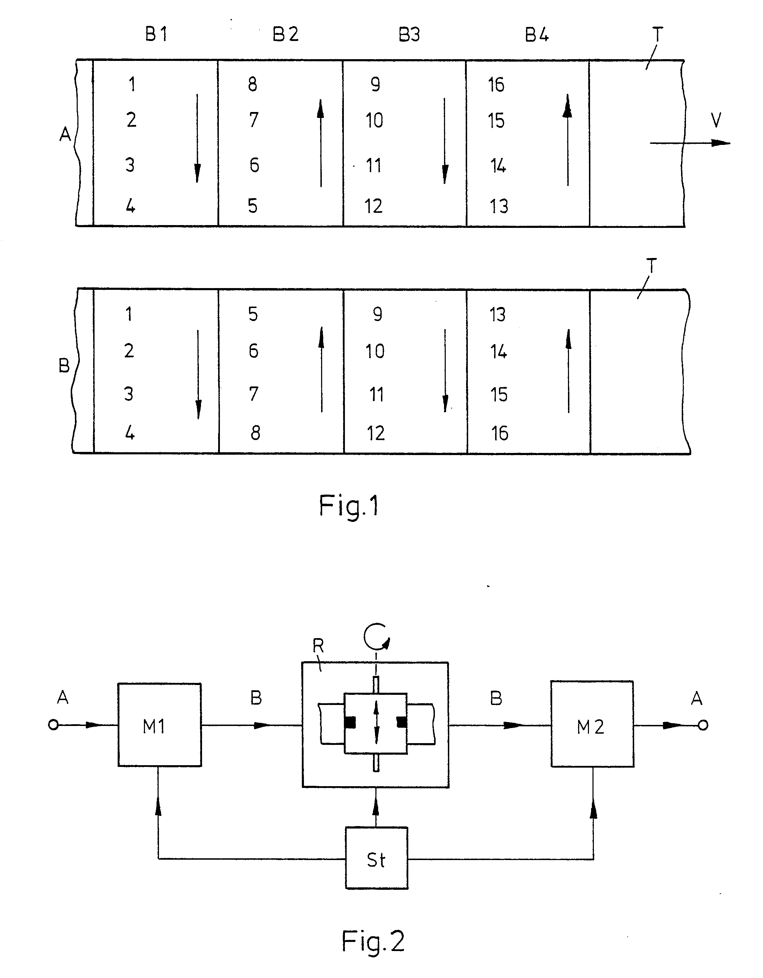

In Fig. 1A werden auf dem Magnetband T nacheinander die Blökke B1 bis B4 aufgezeichnet, und zwar in jedem Block vier Bilder. Die von Block zu Block entgegengesetzte Hubrichtung des Kopfrades ist durch die Pfeile dargestellt. Dadurch ergibt sich die dargestellte räumliche Anordnung der insgesamt 16 zeitlich aufeinanderfolgende Bilder. Bei der Abtastung mit normaler Bandgeschwindigkeit V würden diese Bilder in der Reihenfolge 1 bis 16 wiedergegeben. Es sei jetzt angenommen, daß sich die Längsgeschwindigkeit V des Magnetbandes T um den Faktor n gegenüber der Normalgeschwindigkeit Vo erhöht. Dann wird gleichzeitig der Hub H um den Faltor n gegenüber dem Normalhub Ho verringert. Das bedeutet, .

$$V = n \cdot Vo$$
$$H = Ho/n.$$

Wenn jetzt z.B. mit n = 4 an der oberen Kante des Magnetbandes T jeweils nur das erste Bild abgetastet wird, so ergibt sich hinsichtlich der zeitlichen Ordnungszahl eine Folge 1, 8, 9, 16. Es ist ersichtlich, daß hier eine starke Unstetig keit vorliegt in Form von stark unterschiedlichen Sprüngen in der zeitlichen Ordnungszahl.

Gemäß Fig. 1B ist die Reihenfolge der aufgezeichneten Bilder gegenüber Fig. 1A geändert. In den Blöcken B2 und B4 ist die Reihenfolge der in Hubrichtung aufgezeichneten Bilder vertauscht. In den Blöcken B1 und B3 bleibt die Reihenfolge unverändert. Es ist ersichtlich, daß jetzt mit n = 4 an der oberen Kante des Magnetbandes T Bilder in der Reihenfolge 1, 5, 9, 13 abgetastet werden. Die Ordnungzahlen dieser Bilder haben also gleichen Abstand von 4, so daß die Unstetigkeit gemäß Fig. 1A nicht mehr auftritt.

In Fig. 2 gelangt das die Bildfolge gemäß Fig. 1 darstellende Signal in der Reihenfolge gemäß A auf den Speicher M1, der von dem Steuergerät St gesteuert ist. In dem Speicher M1 werden während des Blockes B2 die Bilder 5, 6, 7, 8 gespeichert und danach in der umgekehrten Reihenfolge 8, 7, 6, 5 aufgezeichnet, entsprechend wird verfahren im Block B4. In den Blöcken B1 und B3 bleibt die Reihenfolge unverändert. Die Signale der Blöcke werden nun ebenfalls um die Dauer eines Blockes verzögert, damit sie in ihrer zeitlichen Lage mit den Signalen der Blöcke B2 und B4 wieder übereinstimmen. Das Signal gemäß Fig. 1B wird mit dem gemäß der Hauptanmeldung ausgebildeten Recorder R aufgezeichnet. Bei der Wiedergabe erscheint am Ausgang wieder das Signal gemäß Fig. 1B. Bei n = 4 kann somit z.B. die Signalfolge 1, 5, 9, 13 abgetastet werden. Bei Normalgeschwindigkeit V = Vo hätten die Bilder in den Blöcken B2 und B4 die falsche Reihenfolge. Diese an sich falsche Reihenfolge wird mit dem Speicher M2 wieder korrigiert, indem in den Blöcken B2 und B4 die Bilder in der Reihenfolge gemäß Fig. 1B eingelesen und gemäß Fig. 1A wieder ausgelesen werden. Der Speicher M1 dient also grundsätzlich dazu, die Reihenfolge der aufgezeichneten Bilder zu ändern, und der Speicher M2 dazu, die für die Wiedergabe richtige Reihenfolge der Bilder wieder herzustellen. Der Spei cher M2 liefert daher bei Wiedergabe mit Normalgeschwindigkeit wieder das Signal gemäß Fig. 1A.

Die Tabelle I zeigt eine weitere Abwandlung der Reihenfolge der in einem Block B aufgezeichneten Bilder.Die Anzahl der Bilder je Block beträgt hier 24. Die Reihenfolge ist so getroffen, daß für n = 2, 3, 4, 6, 8, 12 immer Gruppen jeweils mit 24/n aufeinanderfolgenden Bildern abgetastet werden, deren zeitliche Ordnungzahlen über den ganzen Block, also 1 bis 24, etwa gleichmäßig verteilt sind. Bei n = 2 werden z.B. nur die ungeradzahligen Bilder auf der oberen Bandhälfte oder die geradzahligen Bilder auf der unteren Bandkante und bei n = 4 z.B. die Bilder 2-10-18-6-14-22 abgetastet, die etwa gleichmäßig über den ganzen Block 1 bis 24 verteilt sind. Für n = 3 ist der zeitliche Abstand aufeinanderfolgender Bilder nur näherungsweise gleich. Der Speicher M2 bewirkt dann wieder die Ordnung dieser Bilder mit aufsteigender Ordnungszahl. Auf diese Weise sind im Block m die Bilder mit den Ordnungszahlen 1 bis 24 also in einer ganz speziellen, dargestellten Reihenfolge aufgezeichnet. Im Block m + 1 erfolgt entsprechend die Aufzeichnung der darauffolgenden Bilder Nr. 25 bis 48, jedoch nicht entsprechend der geänderten Hubrichtung von unten nach oben, sondern gemäß Fig. 1B entsprechend abgewandelt von oben nach unten.

Die Tabelle II zeigt eine weitere Abwandlung der Reihenfolge der Bilder 1 bis 24 innerhalb eines Blockes B und die einzelnen Gruppen von Bildern für die Werte von n = 2, 3, 4, 6, 8, 12. Jeweils die Bilder einer Bildgruppe, z.B. 8, 20, 12, 4, 16, 24 für n = 4 sind wieder etwa gleichmäßig über den ganzen Block B, der den Bildern 1 bis 24 entspricht, verteilt. Hier sind in der Mitte des Blockes geradzahlige und ungeradzahlige Bilder so angeordnet, auch für n = 3 eine äquidistante Bildfolge ermöglicht ist. Tabelle III zeigt eine weitere Anordnung der Bilder 1 bis 24 auf dem Magnetband T. Bei dieser Reihenfolge werden für die Speicherung sowohl bei der Aufzeichnung als auch bei der Wiedergabe möglichst wenig Bildspeicher benötigt. Dies wird dadurch erreicht, daß Bilder mit hoher und niedriger Ordnungszahl innerhalb eines Blockes, z.B. Nr. 23, 24 und 1, 2 möglichst weit in der Mitte des Blockes liegen.

Bei einer unmittelbaren Umkehr der Reihenfolge gemäß Fig. 1B müssen die Bilder eines ganzen Blockes gespeichert werden, bevor das Einlesen in der umgekehrten Reihenfolge beginnen kann. Das würde in Tabelle I 23 Bildspeicher erfordern, da auf das Bild Nr. 24 für die Aufzeichnung des nächsten Blokkes das Bild Nr. 48 folgt. Bei der Reihenfolge gemäß Tabelle III sind indessen durch die besondere Anordnung sowohl für die Aufzeichnung als auch für die Wiedergabe nur 18 Bildspeicher erforderlich. Es kann auch erwünscht sein, daß nur bei der Aufzeichnung oder nur bei der Wiedergabe möglichst wenig Speicherplatz für das Umsortieren der Bildfolge erforderlich ist, da in dem betreffenden Betriebsfall der Speicherplatz für andere Aufgaben benötigt wird. Dann wäre Tab. III so zu ändern, daß vor allem die Bilder mit hoher Ordnungszahl (Aufzeichnung) bzw. vor allem die Bilder mit niedriger Ordnungszahl (Wiedergabe) möglichst weit in der Mitte des Blockes liegen.

In Tab. IV ist für die Anordnung der Bilder eines Blockes gemäß Tab. III die Speicherbenutzung bei der Aufzeichnung (Bildverschachtelung) und bei der Wiedergabe (Bildentschachtelung) dargestellt. Die 1. Spalte stellt die zeitlich aufeinanderfolgenden Bilder 1 bis 24 eines Blockes für das Ende des Blockes m, für den Block m + 1 und den Anfang des Blockes m + 2 dar. Die 2. Spalte gibt Nummern der Bildspeicher an, in die die aufeinanderfolgenden Bilder eingelesen werden. Die 3. Spalte zeigt, an welcher Stelle die aus den Speichern ausgelesenen Bilder 1 bis 24 auf dem Magnetband T gespeichert werden. Auf dem Magnetband T sind die Bilder 1 bis 24 des Blockes m in der in Tabelle III darge stellten Reihenfolge gespeichert. Z.B. wird das Bild Nr. 20 des Blockes m zunächst in dem Speicher 7 gespeichert und mit der durch die Änderung der Reihenfolge bedingten Verzögerung wieder aus dem Speicher 7 ausgelesen und als Bild 20 auf dem Magnetband T aufgezeichnet. Entsprechend wird z.B. das Bild Nr. 24 des Blockes m in dem Speicher 1 gespeichert und dann aus dem Speicher 1 ausgelesen und auf dem Magnetband T gespeichert. Für das Bild Nr. 23 ist keine Speicherung notwendig. Dieses Bild kann unmittelbar auf dem Magnetband T aufgezeichnet werden.

Die Spalten 4 und 5 zeigen sinngemäß die Vorgänge für die Änderung der Bildreihenfolge bei der Wiedergabe. Dabei geht aus der 4. Spalte die Speicherbelegung hervor. Die 5. Spalte zeigt wieder die Bilder in ihrer ursprünglichen Reihenfolge mit einer Verschiebung, die durch die Zwischenspeicherung in den Speichern M1 und M2 bei der Aufzeichnung und der Wiedergabe verursacht ist.

Aus Tab. IV geht hervor, daß sowohl für die Aufzeichnung als auch für die Wiedergabe, 18 Bildspeicher ausreichend sind. Die Einzelverschiebungen D1 bei Aufzeichnung und D2 bei Wiedergabe sind jeweils für die einzelnen Bilder unterschiedlich. Z.B. gilt für Bild 21 D1 = 7; D2 = 29

für Bild 23 D1 = 0; D2 = 36

Die Gesamtverschiebung D1 + D2 ist jedoch für alle Bilder gleich und beträgt hier 36. Dadruch ist nach dem Gesamtprozeß die ursprüngliche Reihenfolge wiederhergestellt.

Für die Wirkungsweise in Tabelle IV ist es erforderlich, einen weiteren Speicher vorzusehen, in dem die Zuordnung der Bilder zu den Speichern vorübergehend gespeichert wird, z.B. die Information, daß das aufzuzeichnende Bild 19 des Blockes m in dem Speicher Nr. 13 oder das Bild 20 in dem Speicher Nr. 7 gespeichert ist. Die Reihenfolge gemäß Tabelle III ermöglicht wieder wie dargestellt die Zusammenfassung von auf einanderfolgenden Bildern zu Bildgruppen mit je 24/n Bildern für n = 2, 3, 4, 6, 8, 12. Dabei sind wieder die Bilder eines Blockes, z.B. 3, 15, 9, 21 für n = 6, so zu Gruppen zusammengefaßt, daß für alle Werte n bei der entsprechenden Hubeinschränkung Bereiche abgetastet werden können, die der Abtastgeschwindigkeit entsprechende äquidistante Bilder enthalten. Dadurch ergibt sich bei der Wiedergabe nach entsprechender Ordnung der Bilder in die richtige Reihenfolge ein kontinuierlicher Bewegungsablauf ohne Unstetigkeiten, d.h. ohne Unterschied in den Sprüngen in der Ordnungzahl.

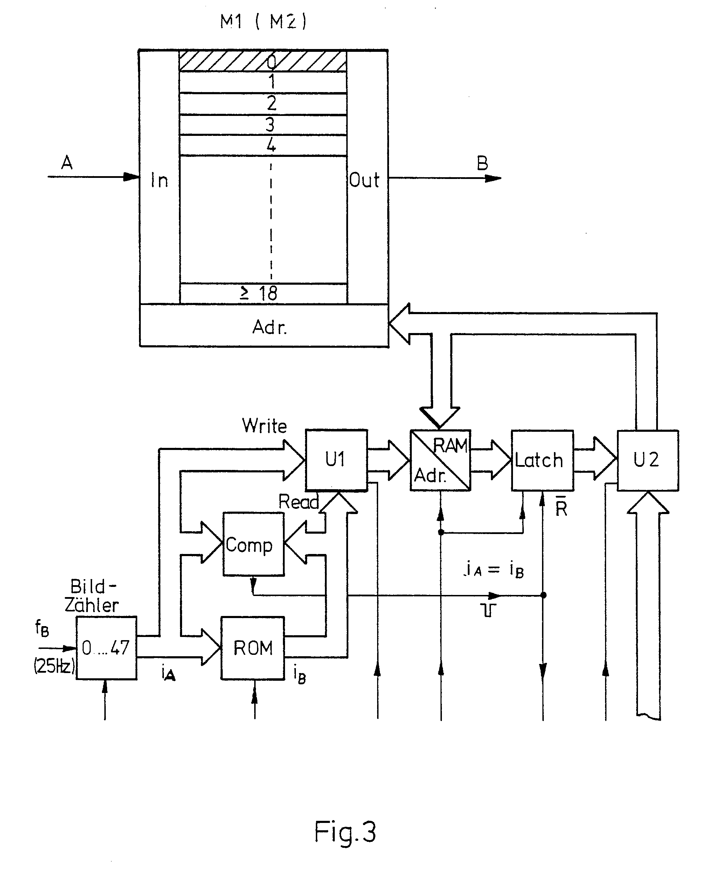

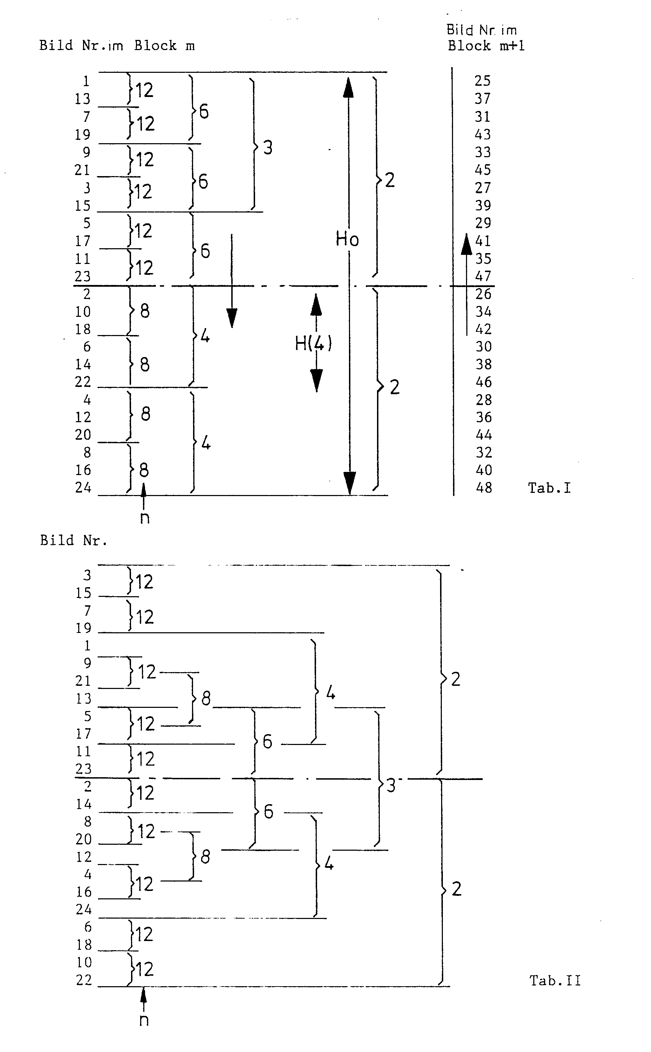

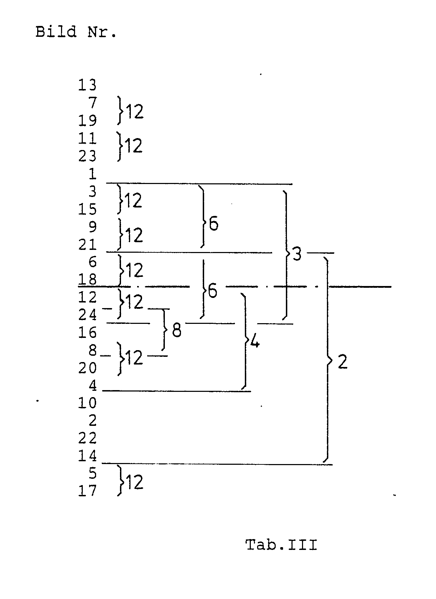

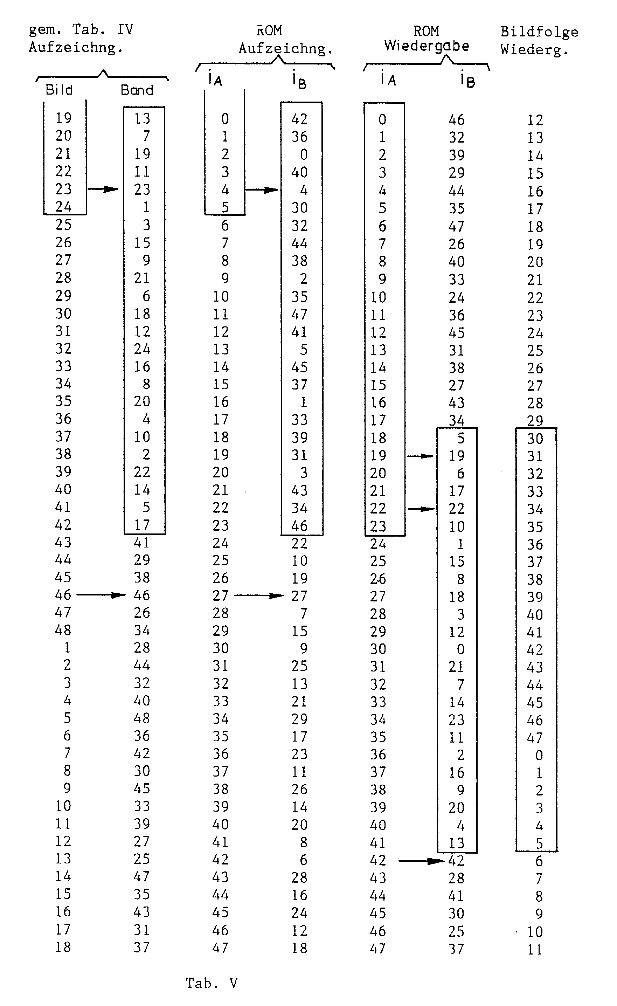

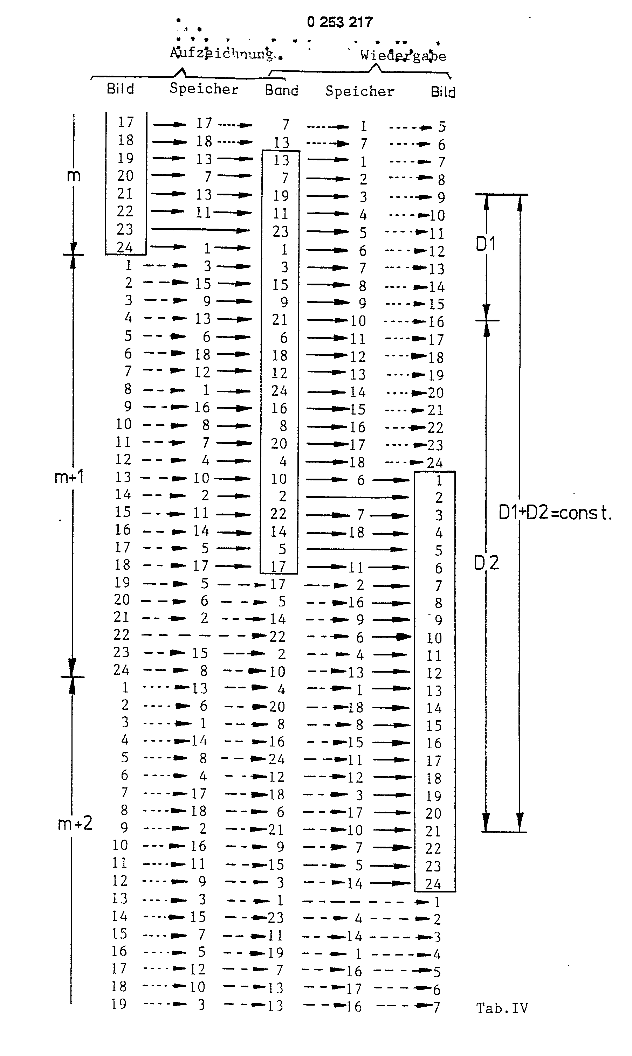

Eine Schaltung, mit der die Aufzeichnung bzw. Wiedergabe mit einer Bildverschachtelung gemäß Tabelle IV unter Verwendung von 18 Bildspeichern durchführbar ist, zeigt Fig. 3. Fig. 3 zeigt die Speicher M1 bzw. M2 und einen Teil der Steuerschaltung St von Fig. 1. Die nach unten gehenden offenen Leitungen führen zu dem übrigen Teil der Steuerschaltung St. Die Speichereinheit M1 bzw. M2 enthält 18 Bildspeicher 1 ... 18 und eine Kurzschlußverbindung, die durch Aufruf der Adresse 0 einschaltbar ist.

Am Eingang A liegt das z.B. von einer Empfangsschaltung bzw. von den Wiedergabeköpfen kommende Bildsignal. Der Ausgang B liefert dann das Signal mit der in erforderlicher Weise geänderten Reihenfolge der Bilder. Ein Zähler zählt die Bilder jeweils über eine volle Hubperiode, z.B. 0 ... 23 abwärts und 24 ... 47 aufwärts. Die für die Aufzeichnung bzw. für die Wiedergabe erforderliche Änderung der Bildfolge ist durch den Inhalt des ROM festgelegt. Tabelle V zeigt die im ROM abgelegten Bildfolgen für die Aufzeichnung und Wiedergabe. Die Bezifferung ist gegenüber Tabelle IV so geändert, daß der Zählerbeginn "0" mit dem Anfang der Hubperiode zusammenfällt.

Die Auswahl des jeweils gleichzeitig gelesenen und wieder beschriebenen Bildspeichers erfolgt über den Umschalter U2 entweder von der Steuerschaltung her, z.B. beim Start oder bei den Sonderläufen oder von einem RAM, in dem vermerkt ist, in welchem Bildspeicher sich das gerade auszulesende Bild befindet. Nach einem Start werden die ersten 18 Bilder der Reihe nach in 18 Bildspeicher geladen. Dabei werden z.B. beim Start einer Aufzeichnung in die Adressen 30 ... 47 des RAM die Bildspeicheradressen (z.B. 1 ... 18) geladen. Der Umschalter U1 schaltet dabei den Ausgang des Bildzählers zum Adresseneingang des RAM durch. Danach verbindet der Umschalter U2 den Datenausgang des RAM mit dem Adreßeingang der Bildspeichereinheit M1. Der Datenausgang des RAM ist dabei über einen Zwischenspeicher (Latch) geführt. Der Zwischenspeicher hält die jeweils aufgerufene Bildspeicheradresse, bis die jeweilige Bildumspeicherung abgeschlossen ist.

Die Reihenfolge der aus den Bildspeichern zu lesenden Bilder wird durch den Inhalt des ROM bestimmt. Die Ordnungszahl der in die Bildspeicher zu schreibenden Bilder gibt der Bildzähler an. Der Umschalter U1 sorgt dafür, daß die Ordnungszahl des auszulesenden Bildes zunächst auf den Adreßeingang des RAM gegeben wird, damit die Adresse des richtigen Bildspeichers auf das Latch übertragen werden kann. Sobald dies geschehen ist, kann die Ordnungszahl des gleichzeitig in denselben Bildspeicher eingegebenen Bildes über den Umschalter U1 dem Adreßeingang des RAM zugeführt werden, damit in dem der Ordnungszahl des Bildes zugeordneten Speicherplatz des RAM die gerade anliegende Bildspeicheradresse abgelegt werden kann. Diese dient dann beim Aufruf des Bildes zum Auslesen zur Auswahl des richtigen Bildspeichers.

Sofern die Ordnungszahl des Bildes am Eingang des ROM mit der Bildnummer am Ausgang des ROM übereinstimmt, wird das Bild direkt vom Eingang zum Ausgang der Speichereinheit M1 übertragen. Dies erfolgt über den Kanal mit der Adresse "0". Die Übereinstimmung von ROM-Eingang und -Ausgang wird hier durch einen Comperator festgestellt, der dann das Latch auf Null setzt. Die Abspeicherung der Adresse "0" im RAM erübrigt sich.

Es ist nicht notwendig, daß die Begrenzungslinien der einzelnen Blöcke B in Fig. 1 senkrecht zu den Kanten des Aufzeichnungsträgers T stehen. Diese Begrenzungslinien können auch schräg zur Kante des Trägers T gerichtet sein, z.B. unter einem Winkel zwischen 20 und 60° Die Blöcke B haben dann nicht mehr die Form eines Rechtecks, sondern die Form eines Parallelogramms, das durch die schrägen Begrenzungslinien und die Kanten des Trägers T begrenzt ist. Die Blöcke B brauchen auch nicht in Längsrichtung aufeinanderfolgend auf einem Magnetband aufgezeichnet zu sein. Die können auch aufeinanderfolgend entlang einer spiralförmigen Bahn eines plattenförmigen Aufzeichnungsträgers liegen.

Die Erfindung ist auch anwendbar bei einem reinen Wiedergabegerät für bespielte Bänder, die nach dem erfindungsgemäßen Verfahren beschrieben sind. Das Wiedergabegerät hat dann die Aufgabe, die erfindungsgemäß modifizierte Reihenfolge in den aufgezeichneten Bildern wieder in die für die Bildwiedergabe richtige Reihenfolge umzuwandeln, z.B. entsprechend den Spalten 3, 4, 5, mit "Wiedergabe" bezeichnet, in Tabelle IV. Ein derartiges reines Wiedergabegerät enthält den Speicher M2 gemäß Fig. 2, während der für die Aufnahme benötigte Speicher M1 nicht vorgesehen ist.

**Ansprüche**

1. Verfahren zur Aufzeichnung eines Videosignals auf einem Aufzeichnungsträger (T), bei dem mit einem rotierenden und durch eine Hubbewegung quer zur Spurrichtung periodisch bewegten Kopfrad auf dem Aufzeichnungsträger (T) aufeinanderfolgende Blöcke mit je einer Vielzahl von Bildern in nebeneinanderliegenden Spuren geschrieben werden, nach Patentanmeldung P 35 09 584.9, dadurch gekennzeichnet , daß bei der Aufnahme die Reihenfolge der geschriebenen Bilder innerhalb eines Blockes (B) so gewählt wird, daß im gleichen Abstand von der Bandkante aufgezeichnete Bilder in aufeinanderfolgenden Blöcken hinsichtlich ihrer zeitlichen Zuordnung in der Bildsequenz, aus der sie entnommen bzw. zu der sie zusammengefügt werden sollen, äquidistant sind.

2. Verfahren nach Anspruch 1, dadurch gekennzeichnet, daß die Bilder eines Blockes (B) in einer solchen räumlichen Reihenfolge auf dem Band (T) aufgezeichnet werden, daß die innerhalb eines entsprechend einer erhöhten Bandgeschwindigkeit verringerten Hubbereiches (H) abtastbaren Bilder in aufeinanderfolgenden Blöcken hinsichtlich ihrer zeitlichen Zuordnung in der Sequenz, aus der sie entnommen werden oder zu der sie zusammengefügt werden sollen, äquidistant sind.

3. Verfahren nach Anspruch 1, dadurch gekennzeichnet, daß auf der einen Hälfte des Blockes (B) die Bilder mit ungerader und auf der anderen Hälfte des Blockes die Bilder mit gerader zeitlicher Ordnungszahl aufgezeichnet werden (Tab. I, II).

4. Verfahren nach Anspruch 2, dadurch gekennzeichnet , daß alle Bilder mit gerader und/oder alle Bilder mit ungerader Ordnungszahl innerhalb des Blockes (B) zusammenliegend aufgezeichnet sind, und daß im Grenzbereich zwischen der Aufzeichnung gerader und ungerader Bilder die Anordnung so gewählt wird, daß in diesen Bereichen eine Abtastung von Bildern mit ungeradzahligem Abstand (3) durchführbar ist.

5. Verfahren nach Anspruch 2, dadurch gekennzeichnet, daß die Bilder innerhalb eines Blockes so angeordnet sind, daß alle der Gesamtzahl der Bilder (24) bzw. den zugehörigen Teilern (n = 2,3,4,6,8,12,24) entsprechenden gleichmäßigen Abstände mit vermindertem Hub abtastbar sind, ohne daß dabei am Rand des Blockes aufgezeichnete Bilder benutzt werden müssen (Tab. III).

6. Verfahren nach Anspruch 1, dadurch gekennzeichnet, daß Bilder eines Blockes (B) mit den niedrigsten Ordnungszahlen (z.B. 1, 2) und/oder mit den höchsten Ordnungszahlen (z.B. 23, 24) innerhalb dieses Blockes jeweils möglichst in der Nähe der Mitte des Blockes aufgezeichnet werden (Tab. III).

7. Verfahren nach Anspruch 1, dadurch gekennzeichnet, daß die jeweils in einem Block (B) in Richtung von der er sten zur zweiten Bandkante aufeinanderfolgenden Bilder in benachbarten Blöcken (B) gleiche zeitliche Reihenfolge haben (Fig. 1B).

8. Verfahren nach Anspruch 1, dadurch gekennzeichnet, daß bei der Aufnahme die Signale von Bildern eines Blockes (B2, B4) in einen Speicher (M1) eingelesen und mit geänderter Reihenfolge aus dem Speicher (M1) ausgelesen und aufgezeichnet werden.

9. Verfahren nach Anspruch 1, dadurch gekennzeichnet, daß bei der Wiedergabe die Signale der vom Aufzeichnungsträger (T) abgetasteten Bilder eines Blockes (B) in einen Speicher (M2) eingelesen und mit der für die Bildwiedergabe richtigen Reihenfolge aus dem Speicher (M2) ausgelesen werden.

10. Verfahren nach Anspruch 8 oder 9, dadurch gekennzeichnet, daß die Reihenfolge, in der die Bilder aus dem Speicher (M1 bzw. M2) auszulesen sind, als Tabelle in einem ROM abgelegt ist (Fig. 3).

| | B1 | | B2 | | B3 | | B4 | | T |
|---|---|---|---|---|---|---|---|---|---|

A

| B1 | B2 | B3 | B4 |
|---|---|---|---|
| 1 | 8 | 9 | 16 |
| 2 | 7 | 10 | 15 |
| 3 | 6 | 11 | 14 |
| 4 | 5 | 12 | 13 |

V

| B1 | B2 | B3 | B4 |
|---|---|---|---|
| 1 | 5 | 9 | 13 |
| 2 | 6 | 10 | 14 |
| 3 | 7 | 11 | 15 |
| 4 | 8 | 12 | 16 |

B

Fig.1

Fig.2

M1 ( M2 )

Fig.3

Bild Nr. im Block m

Bild Nr. im Block m+1

| | | | |
|---|---|---|---|
| 1 | }12 | | 25 |
| 13 | | }6 | 37 |
| 7 | }12 | | 31 |
| 19 | | | 43 |
| 9 | }12 | }3 | 33 |
| 21 | | }6 | 45 |
| 3 | }12 | | 27 |
| 15 | | | 39 |
| 5 | }12 | | 29 |
| 17 | | }6 | 41 |
| 11 | }12 | | 35 |
| 23 | | | 47 |
| 2 | | | 26 |
| 10 | }8 | | 34 |
| 18 | | }4 | 42 |
| 6 | }8 | | 30 |
| 14 | | | 38 |
| 22 | | | 46 |
| 4 | }8 | | 28 |
| 12 | | }4 | 36 |
| 20 | | | 44 |
| 8 | }8 | | 32 |
| 16 | | | 40 |
| 24 | | | 48 |

$H_o$

$H(4)$

2

2

n

Tab. I

Bild Nr.

| | |
|---|---|
| 3 | }12 |
| 15 | |
| 7 | }12 |
| 19 | |
| 1 | |
| 9 | }12 |
| 21 | |
| 13 | }8 |
| 5 | }12 |
| 17 | }6 |
| 11 | }12 |
| 23 | |
| 2 | }12 |
| 14 | }6 |
| 8 | }12 |
| 20 | }8 |
| 12 | |
| 4 | }12 |
| 16 | |
| 24 | }4 |
| 6 | }12 |
| 18 | |
| 10 | }12 |
| 22 | |

4

2

3

2

n

Tab. II

H 86/045

Bild Nr.

Tab.III

| gem. Tab. IV Aufzeichng. | | ROM Aufzeichng. | | ROM Wiedergabe | | Bildfolge Wiederg. |
|---|---|---|---|---|---|---|
| Bild | Band | $i_A$ | $i_B$ | $i_A$ | $i_B$ | |
| 19 | 13 | 0 | 42 | 0 | 46 | 12 |
| 20 | 7 | 1 | 36 | 1 | 32 | 13 |
| 21 | 19 | 2 | 0 | 2 | 39 | 14 |
| 22 | 11 | 3 | 40 | 3 | 29 | 15 |
| 23 | 23 | 4 | 4 | 4 | 44 | 16 |
| 24 | 1 | 5 | 30 | 5 | 35 | 17 |
| 25 | 3 | 6 | 32 | 6 | 47 | 18 |
| 26 | 15 | 7 | 44 | 7 | 26 | 19 |
| 27 | 9 | 8 | 38 | 8 | 40 | 20 |
| 28 | 21 | 9 | 2 | 9 | 33 | 21 |
| 29 | 6 | 10 | 35 | 10 | 24 | 22 |
| 30 | 18 | 11 | 47 | 11 | 36 | 23 |
| 31 | 12 | 12 | 41 | 12 | 45 | 24 |
| 32 | 24 | 13 | 5 | 13 | 31 | 25 |
| 33 | 16 | 14 | 45 | 14 | 38 | 26 |
| 34 | 8 | 15 | 37 | 15 | 27 | 27 |
| 35 | 20 | 16 | 1 | 16 | 43 | 28 |
| 36 | 4 | 17 | 33 | 17 | 34 | 29 |
| 37 | 10 | 18 | 39 | 18 | 5 | 30 |
| 38 | 2 | 19 | 31 | 19 | 19 | 31 |
| 39 | 22 | 20 | 3 | 20 | 6 | 32 |
| 40 | 14 | 21 | 43 | 21 | 17 | 33 |
| 41 | 5 | 22 | 34 | 22 | 22 | 34 |
| 42 | 17 | 23 | 46 | 23 | 10 | 35 |
| 43 | 41 | 24 | 22 | 24 | 1 | 36 |
| 44 | 29 | 25 | 10 | 25 | 15 | 37 |
| 45 | 38 | 26 | 19 | 26 | 8 | 38 |
| 46 | 46 | 27 | 27 | 27 | 18 | 39 |
| 47 | 26 | 28 | 7 | 28 | 3 | 40 |
| 48 | 34 | 29 | 15 | 29 | 12 | 41 |
| 1 | 28 | 30 | 9 | 30 | 0 | 42 |
| 2 | 44 | 31 | 25 | 31 | 21 | 43 |
| 3 | 32 | 32 | 13 | 32 | 7 | 44 |
| 4 | 40 | 33 | 21 | 33 | 14 | 45 |
| 5 | 48 | 34 | 29 | 34 | 23 | 46 |
| 6 | 36 | 35 | 17 | 35 | 11 | 47 |
| 7 | 42 | 36 | 23 | 36 | 2 | 0 |
| 8 | 30 | 37 | 11 | 37 | 16 | 1 |
| 9 | 45 | 38 | 26 | 38 | 9 | 2 |
| 10 | 33 | 39 | 14 | 39 | 20 | 3 |
| 11 | 39 | 40 | 20 | 40 | 4 | 4 |
| 12 | 27 | 41 | 8 | 41 | 13 | 5 |
| 13 | 25 | 42 | 6 | 42 | 42 | 6 |
| 14 | 47 | 43 | 28 | 43 | 28 | 7 |
| 15 | 35 | 44 | 16 | 44 | 41 | 8 |
| 16 | 43 | 45 | 24 | 45 | 30 | 9 |
| 17 | 31 | 46 | 12 | 46 | 25 | 10 |
| 18 | 37 | 47 | 18 | 47 | 37 | 11 |

Tab. V

Tab. IV

| | Aufzeichnung | | | Wiedergabe | |
|---|---|---|---|---|---|
| | Bild | Speicher | Band | Speicher | Bild |
| m | 17 | 17 | 7 | 1 | 5 |
| | 18 | 18 | 13 | 7 | 6 |
| | 19 | 13 | 13 | 1 | 7 |
| | 20 | 7 | 7 | 2 | 8 |
| | 21 | 13 | 19 | 3 | 9 |
| | 22 | 11 | 11 | 4 | 10 |
| | 23 | | 23 | 5 | 11 |
| | 24 | 1 | 1 | 6 | 12 |
| | 1 | 3 | 3 | 7 | 13 |
| | 2 | 15 | 15 | 8 | 14 |
| | 3 | 9 | 9 | 9 | 15 |
| | 4 | 13 | 21 | 10 | 16 |
| | 5 | 6 | 6 | 11 | 17 |
| | 6 | 18 | 18 | 12 | 18 |
| | 7 | 12 | 12 | 13 | 19 |
| | 8 | 1 | 24 | 14 | 20 |
| | 9 | 16 | 16 | 15 | 21 |
| | 10 | 8 | 8 | 16 | 22 |
| | 11 | 7 | 20 | 17 | 23 |
| | 12 | 4 | 4 | 18 | 24 |
| m+1 | 13 | 10 | 10 | 6 | 1 |
| | 14 | 2 | 2 | | 2 |
| | 15 | 11 | 22 | 7 | 3 |
| | 16 | 14 | 14 | 18 | 4 |
| | 17 | 5 | 5 | | 5 |
| | 18 | 17 | 17 | 11 | 6 |
| | 19 | 5 | 17 | 2 | 7 |
| | 20 | 6 | 5 | 16 | 8 |
| | 21 | 2 | 14 | 9 | 9 |
| | 22 | | 22 | 6 | 10 |
| | 23 | 15 | 2 | 4 | 11 |
| | 24 | 8 | 10 | 13 | 12 |
| | 1 | 13 | 4 | 1 | 13 |
| | 2 | 6 | 20 | 18 | 14 |
| | 3 | 1 | 8 | 8 | 15 |
| | 4 | 14 | 16 | 15 | 16 |
| | 5 | 8 | 24 | 11 | 17 |
| | 6 | 4 | 12 | 12 | 18 |
| | 7 | 17 | 18 | 3 | 19 |
| m+2 | 8 | 18 | 6 | 17 | 20 |
| | 9 | 2 | 21 | 10 | 21 |
| | 10 | 16 | 9 | 7 | 22 |
| | 11 | 11 | 15 | 5 | 23 |
| | 12 | 9 | 3 | 14 | 24 |
| | 13 | 3 | 1 | | 1 |
| | 14 | 15 | 23 | 4 | 2 |
| | 15 | 7 | 11 | 14 | 3 |
| | 16 | 5 | 19 | 1 | 4 |
| | 17 | 12 | 7 | 16 | 5 |
| | 18 | 10 | 13 | 17 | 6 |
| | 19 | 3 | 13 | 16 | 7 |

D1

D1 + D2 = const.

D2

H 86/045